# EUROPÄISCHE PATENTSCHRIFT

(11) **EP 1 959 186 B1**
(45) Veröffentlichungstag und Bekanntmachung des Hinweises auf die Patenterteilung: **02.04.2014**
(21) Anmeldenummer: 08001873.2
(22) Anmeldetag: 01.02.2008
(51) Int. Cl.: F16M 11/22, F16M 11/32

(54) **Stativ mit wenigstens drei Stativbeinen**
Stand with at least three support legs
Statif doté d'au moins trois pieds

(30) Priorität: 13.02.2007 DE 102007007041
(43) Veröffentlichungstag der Anmeldung: 20.08.2008
(73) Patentinhaber: Leica Geosystems AG, 9435 Heerbrugg (CH)
(72) Erfinder: Bögel, Gerhard, 9436 Balgach (CH)
(74) Vertreter: Kaminski Harmann

(56) Entgegenhaltungen:
- WO-A-2006/022896
- US-A- 2 188 237
- US-A- 2 552 921
- US-A- 4 214 724
- US-A- 5 421 115
- US-A- 6 042 080

## Beschreibung

Die Erfindung betrifft ein Stativ mit wenigstens drei Stativbeinen, welches zur Halterung eines Nivellierungs-, Lotungs- und Winkelkalibrierungsinstrumentes, z.B. eines Linienlaser-, Punktlaser- oder Kleinrotationslasergerätes, ausgeführt ist, wobei die Stativbeine mit ihren einander zugewendeten Enden um eine gemeinsame Achse verdrehbar ausgeführt sind und jedes der Stativbeine mit Abstand von der Achse um jeweils den gleichen Winkel abgebogen ist.

Für Linienlaser wird eine Reihe von Zubehör angeboten. Es geht immer darum, den Linienlaser relativ zur gewünschten Arbeitsposition aufzustellen. Die Linienlaser sind z.B. mit einem Photogewinde ausgestattet. Damit kann der Anwender sehr kleine oder normalgrosse Photostative einsetzen, die meist eine über Kurbel verstellbare Zentralsäule (Höhenfeinverstellung des Linienlasers) aufweisen. Ein anderer Ansatz sind Teleskopsäulen, die senkrecht zwischen Boden und Decke verspannt werden. Damit kann in einem Raum jede beliebige Höhenlage für die Platzierung eines Linienlasers eingestellt werden.

Für Punkt - und Linienlaser sind auch Befestigungshilfen bekannt zum Anbinden an Rohre, zur Befestigung mit Magneten oder durch direkte Verschraubung an einer Wand. Es sind auch derartige blockartige Befestigungshilfen bekannt, die durch um horizontale Achsen ausklappbare Fusselemente in ein dreibeiniges Stativ verwandelt werden können.

Weitere Halterungen für Nivellierungs-, Lotungs- und Winkelkalibrierungsinstrumente sind auch aus der WO2006/02289 der EP1108981A2, der US-5541727A und der US5584458A bekannt. Bei allen Ausgestaltungen bedarf es aber einiger Vormontagearbeiten und die Konstruktionsteile sind groß und aufwändig.

Weiterhin wird in der US 2,552,921 ein Gestell beschrieben, das zur Aufnahme eines Musikinstruments vorgesehen ist, wobei sich das Gestell kompakt zusammenklappen lässt und die Stativbeine dabei eingeklappt werden können.

Ausserdem beschreibt die US 5,421,115 eine Auflage für eine Feuerwaffe, wobei der Auflageteil der Vorrichtung mittels eines Stativs aufgestellt und positioniert werden kann. Die Stativbeine sind hierbei durch eine Gewindestrange miteinander verbunden und lassen sich für einen Transport der Vorrichtung in einfacher Weise zusammenklappen bzw. voneinander trennen.

Die DE 20 202 354 119 zeigt ein Stativ der eingangs genannten Art mit drei um eine gemeinsame Achse verdrehbaren Stativbeinen. Die Stativbeine werden beim gattungsgemäßen Stand der Technik so auseinander gedreht, dass ein Dreibein entsteht, sodass das Stativ auf dem Untergrund auf seinen Stativbeinen sicher steht und so das auf das Stativ aufsetzbare Instrumente sicher gehalten ist.

Die Erfindung hat sich nun zur Aufgabe gestellt, ein gattungsgemäßes Stativ dahingehend weiterzubilden, dass es auch als Wandhalterung für ein Nivellierungs-, Lotungs- und Winkelkalibrierungsinstrument verwendet werden kann.

Erfindungsgemäß gelingt dies dadurch, dass das unterste Stativbein an einem frei auskragenden Abschnitt einen quer dazu frei auskragenden, vorzugsweise weiteren, Gewindebolzen aufweist.

Der Gewindebolzen am frei auskragenden Abschnitt des untersten Stativbeins kann somit zur Halterung des Nivellierungs-, Lotungs- und Winkelkalibrierungsinstrumentes geeignet bzw. vorgesehen sein. Wenn das Stativ, wie beim Stand der Technik üblich, einen an der gemeinsamen Achse der Stativbeine angeordneten Gewindebolzen zur Halterung des Nivellierungs-, Lotungs- und Winkelkalibrierungsinstrumentes aufweist, so handelt es sich bei dem erfindungsgemäßen Gewindebolzen am frei auskragenden Abschnitt des untersten Stativbeins um einen weiteren, bzw. zusätzlichen Gewindebolzen. Bevorzugt ist jedes der Stativbeine um jeweils den gleichen Winkel an einer Abbiegung abgebogen ist, wobei jedes Stativbein einen zwischen der gemeinsamen Achse und der Abbiegung angeordneten Abschnitt und auf der zu diesem Abschnitt gegenüberliegenden Seite der Abbiegung den frei auskragenden Abschnitt aufweist.

Durch die Möglichkeit des Verdrehens der Stativbeine wird erreicht, dass ein Stativ praktisch auf die Größe von drei aus Flachteilen gebildeten Stativbeinen zusammengelegt werden kann und dass das Stativ durch einfaches Auseinanderschwenken mit um jeweils ca. 120° zueinander versetzte Stellungen einsatzbereit aufgestellt werden kann. Gerade für ein universell einsetzbares kleines Stativ ist dies eine optimale Ausgestaltung. Daher könnte ein solches Stativ auch ohne weiteres aus Kunststoffspritzgussteilen gefertigt werden. Das Stativ kann auch auf rauen und unebenen Oberflächen standsicher aufgestellt werden.

Damit die Standfestigkeit des Stativs auf dem Boden verbessert wird, wird vorgeschlagen, dass die Stativbeine Seitenbegrenzungen aufweisen, welche zumindest nahe der frei auskragenden Auflageenden der Stativbeine zueinander konvergieren. Es sind daher diese Enden zu einer Spitze oder zumindest zu einer abgerundeten Spitze hin ausgeformt.

Damit an diesem Stativ, wenn das Stativ auf seinen Stativbeinen steht, die Instrumente oder Geräte ordnungsgemäß befestigt werden können, ist vorgesehen, dass das oberste Stativbein in der gemeinsamen Achse der Stativbeine überragend ein Gewindebolzen ausgebildet ist, welcher mit einer unterhalb des untersten Stativbeines angeordneten Betätigungsscheibe in Wirkverbindung steht. Es kann daher eine Befestigung der Instrumente oder Geräte in gleicher Weise wie bei einer Fotoausrüstung erfolgen.

Ferner wird vorgeschlagen, dass die Stativbeine zumindest im Bereich der gemeinsamen Achse mit geringem Abstand zueinander angeordnet sind. Auf diese Weise ist es möglich geworden, die Stativbeine aus einem Flachprofil zu fertigen, denn ein gegenseitiges Verschwenken um die gemeinsame Achse ist durch diesen Abstand in einfacher Weise ermöglicht worden.

In diesem Zusammengang ist noch vorteilhaft, wenn die Stativbeine in zusammengeschwenkten Zustand über deren ganze Länge mit geringem Abstand zueinander angeordnet sind. Bei einem Verschwenkvorgang, also beim Ausschwenken der Stativbeine in die Abstützstellung und auch in der zusammengeschwenkten Stellung sind sich die Stativbeine nie im Wege.

Damit ein Ausgleich der in verschiedenen Höhenlagen an der gemeinsamen Achse angreifenden Stativbeine geschaffen wird und die gemeinsame Achse bei einem Einsatz des Stativ auf einem Boden praktisch von vorne herein in vertikaler Richtung verläuft, ist vorgesehen, dass die beiden durch die Abbiegung entstandenen Abschnitte der Stativbeine bei allen Stativbeinen unterschiedlich lang ausgeführt sind.

Dabei liegt eine vorteilhafte Konstruktion darin, dass die beiden durch die Abbiegung entstandenen Abschnitte des obersten Stativbeines am längsten und diese Abschnitte des untersten Stativbeines am kürzesten ausgeführt sind. Dadurch stören sich die Stativbeine nicht gegenseitig bei einem Verschwenkvorgang und außerdem ist immer eine exakt ausgerichtete Aufstellung am Boden möglich.

Eine besondere Ausgestaltung sieht vor, dass die beiden Abschnitte der Stativbeine einen Winkel von 135° zueinander einschließen. Diese spezielle Wahl des Winkels ist besonders günstig, um das Stativ für die Wandbefestigung und Halterung eines Instrumentes oder Gerätes einzusetzen. Es ist dann ein Stativbein gegenüber den anderen Stativbeinen um 180° der gemeinsamen Achse ausgeschwenkt und dient zur Befestigung des Stativs an einer Wand oder einer annähernd vertikal ausgerichteten Halterung. Die weiteren um 180° dazu verschwenkten Stativbeine sind dann so ausgerichtet, dass die frei auskragenden Abschnitte der Stativbeine einen Winkel von 90° miteinander einschließen. Das Instrument oder Gerät kann dann praktisch wieder in entsprechender Lage ausgerichtet aufgestellt werden.

In diesem Zusammenhang ist, wie eingangs erwähnt vorgesehen, dass das unterste Stativbein an dem frei auskragenden Abschnitt einen quer dazu frei auskragenden, vorzugsweise weiteren, Gewindebolzen aufweist. Es kann daher bei einem Einsatz des Stativs an einer Wand od.dgl. in gleicher Weise das Instrument oder Gerät fixiert werden.

Damit das Stativ auch bei einem Einsatz an einer Wand oder einer sonstigen Halterung vorteilhaft eingesetzt werden kann, ist vorgesehen, dass wenigstens eines der Stativbeine, vorzugsweise das oberste Stativbein in dem frei auskragenden Abschnitt Ausnehmungen, Schlitze, Bohrungen od.dgl. aufweist. Es kann dadurch in einfacher Weise ein Einhängen oder eine Befestigung durch irgendwelche Befestigungsmittel erfolgen.

Eine weitere Ausgestaltung sieht vor, dass wenigstens eines der Stativbeine, vorzugsweise das oberste Stativbein an dem frei auskragenden Abschnitt wenigstens einen vorzugsweise in der Oberfläche des Stativbeines versenkt angeordneten Dauermagneten trägt. Mit einer solchen Ausgestaltung ist es auch denkbar, eine Befestigung des Stativs an einer Wand oder einem Träger aus Metall ohne zusätzliche Befestigungsmittel zu bewerkstelligen.

Gerade bei einer Wandbefestigung mittels Schrauben mit Kopf ist es vorteilhaft, wenn wenigstens eines der Stativbeine, vorzugsweise das oberste Stativbein in dem frei auskragenden Abschnitt schlüssellochartige Ausnehmungen aufweist. Das Stativ bzw. das entsprechende Stativbein kann nach der Montage einer Schraube an einer Wand eingehängt werden.

Im Rahmen der Erfindung ist es auch möglich, zusätzliche Maßnahmen vorzusehen, um das Stativ z.B. an einem rohrförmigen Halter zu befestigen. Eine Möglichkeit wird durch die Anordnung eines Adapters zum Einsetzen zwischen einem rohrförmigen Halter und eine Stativbeines gesehen, wobei der Adapter nutartige Ausnehmung aufweist zum lagesicheren Anlegen an den rohrförmigen Halter. Somit kann eine solcher Adapter Fest und ohne Verschwenkmöglichkeit an einem rohrförmigen Halter angebracht werden. Dadurch ist dann auch eine optimal ausgerichtet Halterung für das Stativ ermöglicht worden.

In diesem Zusammenhang ist es denkbar, dass der Adapter mittels eines Befestigungsbandes oder eines Spannbandes an einem rohrförmigen Halter festlegbar ist. Es ist dadurch eine sichere mechanische Verbindung zu schaffen.

Eine weitere Möglichkeit der Halterung eines erfindungsgemäßen Stativs am einer Wand od.dgl. ist dann gegeben, wenn zur Verbindung eines Stativbeines an einer ebenen Wand mittels ein Doppelklebeband vorgesehen ist. Es ist also für jede Anwendung eines erfindungsgemäßen Stativs eine optimale und sichere Halterung oder Aufstellung möglich.

Weitere erfindungsgemäße Merkmale und besondere Vorteile werden in der nachstehenden Beschreibung anhand der Zeichnungen noch näher erläutert. Es zeigen:
- Fig. 1: eine Schrägsicht eines erfindungsgemäßen Stativs mit aufgesetztem Instrument;
- Fig. 2: eine Schrägsicht des erfindungsgemäßen Stativs ohne aufgesetztes Instrument;
- Fig. 3: eine Seitenansicht mit in die Ruhelage eingeschwenkten Stativbeinen;
- Fig. 4: eine Seitenansicht der Stativbeine in der Ausrichtung für eine Wandbefestigung des Stativs;
- Fig. 5: die gleiche Darstellung wie in Fig.4, jedoch in einer Schrägsicht;
- Fig.6: eine Ansicht der Ausführung nach den Fig. 4 und 5 in Pfeilrichtung VI in Fig.4 von hinten gesehen;
- die Fig. 7 - Fig. 9: einen Adapter zur Anlage an einem rohrförmigen Halter;
- Fig. 10: eine Schrägsicht eines Adapters;
- Fig. 11: eine Befestigungsmöglichkeit eines Adapters an einem rohrförmigen Halter;
- Fig. 12: eine gleiche Darstellung wie in Fig.11, jedoch mit angesetztem Stativ und aufgesetztem Instrument.

Bei dem erfindungsgemäßen Stativ 1 sind wenigstens drei Stativbeine 2, 3 und 4 vorgesehen. Dieses Stativ 1 ist zur Halterung eines Nivellierungs-, Lotungs- und Winkelkalibrierungsinstrumentes 5, z.B. eines Linienlaser-, Punktlaser- oder Kleinrotationslasergerätes, ausgeführt. Im Rahmen der Erfindung kann dieses Stativ natürlich auch für andere Zwecke eingesetzt werden, z.B. zur Halterung von Fotozubehör, wenn ein Kleinstativ ausreichend ist.

Die wesentlichen Merkmale der Erfindung liegen nun darin, dass die Stativbeine mit ihren einander zugewendeten Enden um eine gemeinsame Achse 6 verdrehbar ausgeführt sind. Ferner sind alle Stativbeine 2, 3, 4 mit Abstand von der Achse 6 um jeweils den gleichen Winkel α abgebogen.

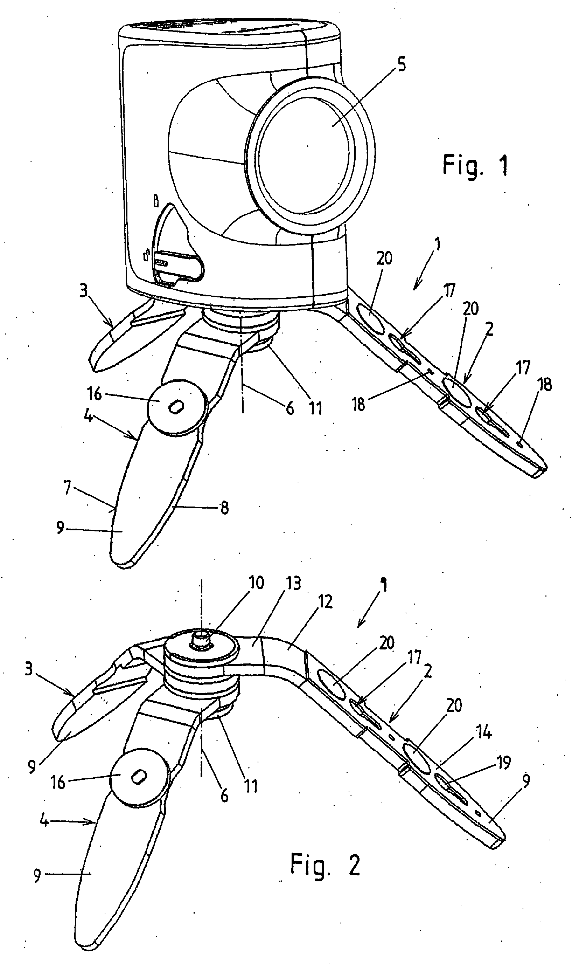

Die Stativbeine 2, 3, 4 weisen Seitenbegrenzungen 7, 8 auf, welche zumindest nahe der frei auskragenden Auflageenden 9 der Stativbeine 2, 3, 4 zueinander konvergieren. Es ist daher gerade beim Aufstellen am Boden eine ausreichende Standsicherheit gegeben. Sind die Stativbeine 2, 3, 4 wie in Fig.1 und Fig.2 abgebildet ausgedreht, hat das Instrument eine wackelfreie Unterlage auf Rohböden. Beispielsweise Fliesenleger können damit die horizontale Ausgangslinie für das Verlegen der Wandplatten unmittelbar vorgeben und die erste Plattenreihe auf die Laserlinie verlegen. Eine standsichere Aufstellung auf unebenen und rauen Oberflächen zu geben ist die Hauptanwendung des Kleinstativs.

Damit ein Instrument 5 sicher auf dem Stativ 1 gehalten werden kann, ist ein das oberste Stativbein 2 in der gemeinsamen Achse 6 der Stativbeine 2, 3, 4 überragend ein Gewindebolzen 10 ausgebildet, welcher mit einer unterhalb des untersten Stativbeines 4 angeordneten Betätigungsscheibe 11 in Wirkverbindung steht. Es ist so eine Schraubbefestigung möglich und somit ein direkter fester Angriff in einer Gewindebohrung am Boden des Instrumentes 5.

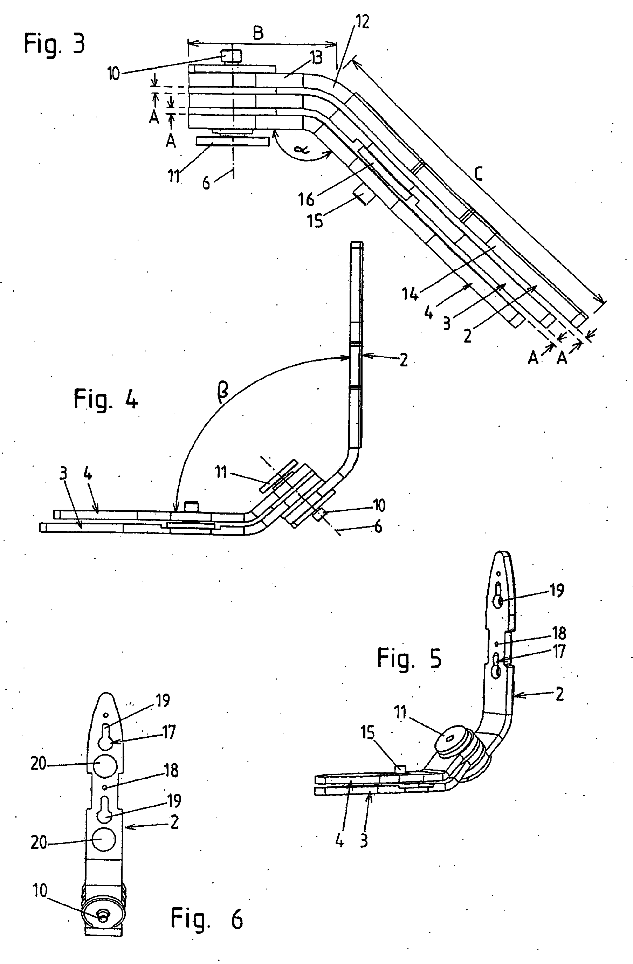

Die Stativbeine 2, 3, 4 sind zumindest im Bereich der gemeinsamen Achse 6 mit geringem Abstand A zueinander angeordnet. Dabei ist es aus konstruktionstechnischen Gründen vorteilhaft, wenn die Stativbeine in zusammengeschwenkten Zustand (siehe insbesondere Fig.3) über deren ganze Länge mit geringem Abstand A zueinander angeordnet sind. Dadurch können die Stativbeine 2, 3, 4 ein einfacher Weise aus einem Flachmaterial gefertigt werden und trotzdem können diese um die gemeinsame Achse 6 ohne gegenseitige Behinderung verschwenkt werden. Ohne diesen Abstand wäre ein derartiges Stativ nicht ausschwenkbar oder die Stativbeine 2, 3, 4 müssten dem Drehradius entsprechend gewölbt ausgeführt sein.

Die beiden durch die Abbiegung 12 entstandenen Abschnitte 13, 14 der Stativbeine 2, 3, 4 sind bei allen Stativbeinen 2, 3, 4 unterschiedlich lang ausgeführt sind. So sind beim Stativbein 2 der Abschnitt 13 mit einer Länge B ausgeführt und der Abschnitt 14 mit einer Länge C. Bei den Stativbeinen 3 und 4 sind die Abschnitte 13 und 14 zunehmend kürzer ausgeführt. Die beiden durch die Abbiegung 12 entstandenen Abschnitte 13 und 14 des obersten Stativbeines 2 sind also am längsten und diese Abschnitte 13 und 14 des untersten Stativbeines 13 und 14 am kürzesten ausgeführt.

Grundsätzlich könnten die verschenkbaren Stativbeine 2, 3, 4 zur gemeinsamen Achse 6 hin in einem nahezu beliebigen Winkel α gebogen sein. Es würde sich nur die Aufstandsfläche entsprechend ändern (kleine Fläche = Kippgefahr; grosse Fläche = hohe Standsicherheit). Da das erfindungsgemäße Stativ auch im Wandbereich oder an vertikal verlaufenden Haltern einsetzbar sein soll, ist es sinnvoll, wenn die beiden Abschnitte 13, 14 der Stativbeine 2, 3, 4 einen Winkel α von 135° zueinander einschließen. Dadurch schließen bei einer Wandhalterung die beiden Abschnitte 14 der um 180° zueinander verschwenkten Stativbeine 2 bzw. 3, 4 einen Winkel β von 90° miteinander ein.

Damit auch bei einem Einsatz des Stativs 1 am Wänden oder vertikal verlaufenden Haltern einsetzbar ist und auch eine entsprechende Befestigung eines Instrumentes 5 erfolgen kann, ist am untersten Stativbein 4 an dem frei auskragenden Abschnitt 14 ein quer dazu frei auskragender weiterer Gewindebolzen 15 vorgesehen, der über eine Betätigungsscheibe 16 verdreht und somit durch Betätigung derselben in eine Gewindebohrung an der Unterseite des Instrumentes 5 eingedreht werden kann.

Es ist im gezeigten Ausführungsbeispiel auch dafür gesorgt, dass das Stativ 1 in einfacher Art und Weise an einer Wand oder einem entsprechenden Halter befestigt werden kann. Dazu weist wenigstens eines der Stativbeine, vorzugsweise das oberste Stativbein 2 in dem frei auskragenden Abschnitt 14 Ausnehmungen 17, Schlitze, Bohrungen 18 od.dgl. auf. Dabei kann vorgesehen werden, dass wenigstens eines der Stativbeine, vorzugsweise das oberste Stativbein in dem frei auskragenden Abschnitt schlüssellochartige Ausnehmungen aufweist. Dann können vorerst zwei mit Köpfen versehene Schrauben in eine Wand eingedreht werden, worauf dann das Stativ im Bereich der schlüssellochartigen Ausnehmungen 19 dieses einen Stativbeines 2 eingeführt und durch vertikales Verschieben festgehalten werden kann.

Im Rahmen der Erfindung ist es auch möglich, dass wenigstens eines der Stativbeine 2, 3, 4, vorzugsweise das oberste Stativbein 2 an dem frei auskragenden Abschnitt 14 wenigstens einen vorzugsweise in der Oberfläche des Stativbeines versenkt angeordneten Dauermagneten 20 trägt. Damit ist auch ohne Anbringen weiterer Befestigungsmittel eine gute Halterung des Stativs 1 an Metallmöbeln oder einer metallischen Wand aus ferromagnetischem Material möglich. Auch ist damit eine Befestigung an einem Adapter 22 denkbar, wo beispielsweise zumindest die Bereiche 21 aus ferromagnetischem Material gefertigt sind.

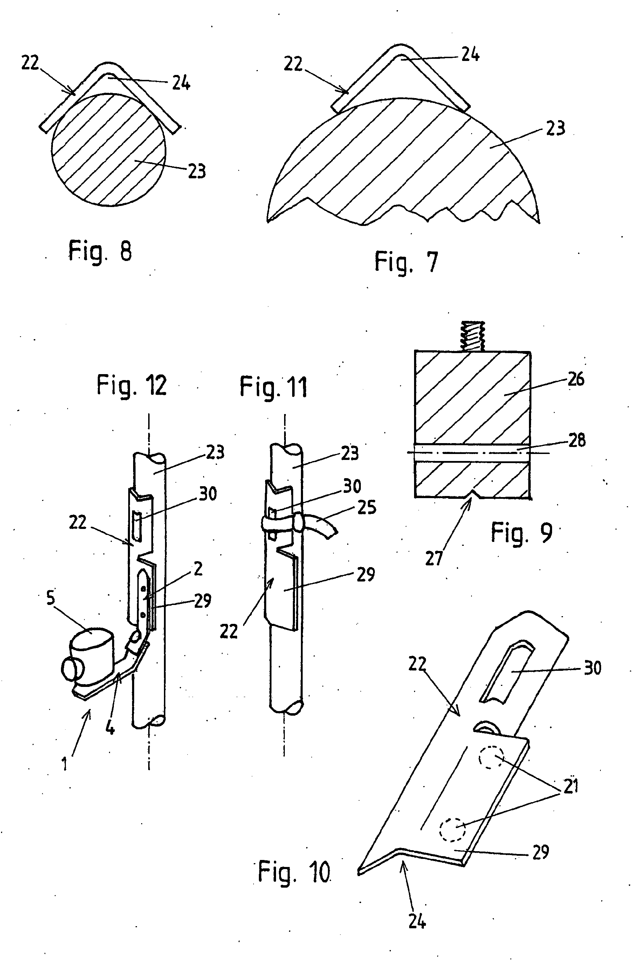

Mit einem Adapter 22 kann das Stativ 1 oder zumindest ein Stativbein 2 auch beispielsweise an einem rohrförmigen Halter 23 zum Einsatz kommen. Dieser Adapter 23 ist auf seiner Rückseite mit einer nutartige Ausnehmung 24 versehen, um dadurch ein lagesicheres Anlegen an den rohrförmigen Halter 23 zu ermöglichen. Blockartige Adapter 26 (gemäß Fig.9) weisen auf ihrer Unterseite eine marginale V-Kerbe 27 auf. Darüber ist ein quer durch den Block gehendes Langloch 28 angeordnet, durch welches ein Befestigungsband geschlauft wird. Diese Art der Befestigung ist für rohrförmige Halter 23 mit kleinen bis kleinsten Durchmessern geeignet.

Der Adapter 22 ist mittels eines Befestigungsbandes oder eines Spannbandes 25 an einem rohrförmigen Halter 23 festlegbar.

Zu dem erfindungsgemäßen Stativ 1, welches auch als Kleinstativ bezeichnet werden kann, ist ein Adapter 22 geschaffen worden, der eine Anbringung an sehr kleinen Rohren bis zu Rohren mit grossem Durchmesser gestattet: Dieser weist zum einen einen Winkelbereich bzw. die nutartige Ausnehmung 24 auf, die groß genug ist, um eine glaubwürdige Zentrierwirkung abzugeben. Ergänzt wird der Adapter 22 mit einer durch einfache Abkantung herstellbaren Befestigungslasche 29 für das Stativ.

Mittig weist der Adapter 22 eine Ausnehmung 30 für die Befestigung mittels des Spannbandes 25. Diese einfache Maßnahme hat den gleichen Zweck wie das Langloch 28 in den blockartigen Adaptern 26. Die Befestigung des Adapters 22 ist jedoch einfacher und ohne jegliches Durchschlaufen auszuführen.

Ferner ist auch die Verwendung eines Doppelklebebandes denkbar, welches an die Rückseite des entsprechenden Stativbeines 2 aufgeklebt und andererseits an eine Wandfläche, z.B. auch im Bereich von Fliesen angedrückt wird. Man erreicht dadurch hohe Haltekraft und Unabhängigkeit vom Werkstoff. Das ist vor allem für die Heizungs-, Ventilations- und Klimatechnik vorteilhaft, wo Kunststoff, Aluminium, Kupfer und vor allem auch rostfreier Stahl eingesetzt wird.

Dank der Gewindebolzen 10 und 15, welche ein 1/4 " - Gewinde aufweisen, kann eine optimale Befestigung eines Instrumentes oder Gerätes erfolgen. Außerdem kann zwischen das Instrument 5r und das Stativ 1 handelsübliches Photozubehör eingeschraubt werden, wie z.B. ein Kugelgelenk.

### Legende zu den Hinweisziffern:

- 1: Stativ
- 2: Stativbein
- 3: Stativbein
- 4: Stativbein
- 5: Instrument
- 6: Achse
- 7: Seitenbegrenzung
- 8: Seitenbegrenzung
- 9: Auflageende
- 10: Gewindebolzen
- 11: Betätigungsscheibe
- 12: Abbiegung
- 13: Abschnitt
- 14: Abschnitt
- 15: Gewindebolzen
- 16: Betätigungsscheibe
- 17: Ausnehmungen
- 18: Bohrungen
- 19: Ausnehmungen (schlüssellochartige)
- 20: Dauermagnet
- 21: Bereich
- 22: Adapter
- 23: Halter
- 24: nutartige Ausnehmung
- 25: Spannband
- 26: blockartiger Adapter
- 27: V-Kerbe
- 28: Langloch
- 29: Befestigungslasche
- 30: Ausnehmung
- A: Abstand
- B: Länge des Abschnittes 13
- C: Länge des Abschnittes 14

## Patentansprüche

1. Ein Stativ (1) mit wenigstens drei Stativbeinen (2,3,4), welches zur Halterung eines Nivellierungs-, Lotungs- und Winkelkalibrierungsinstrumentes (5), z.B. eines Linienlaser-, Punktlaser- oder Kleinrotationslasergerätes, ausgeführt ist, wobei die Stativbeine (2,3,4) mit ihren einander zugewendeten Enden um eine gemeinsame Achse (6) verdrehbar ausgeführt sind und jedes der Stativbeine (2,3,4) mit Abstand von der Achse (6) um jeweils den gleichen Winkel (α) abgebogen ist,
wobei,
das unterste Stativbein (4) an einem frei auskragenden Abschnitt (14) einen quer dazu frei auskragenden ersten Gewindebolzen (15) aufweist,
**dadurch gekennzeichnet, dass**
der erste Gewindebolzen (15) derart angeordnet und ausgebildet ist, dass, wenn das Stativ im Gebrauch ist und sich in einer Ausrichtung für eine Befestigung an einer Wand oder einem vertikal verlaufenden Halter mittels eines der weiteren Stativbeine (2,3), das an seinem frei auskragenden Abschnitt (14) ein Mittel (17,18,20) zur Befestigung des Stativs aufweist, befindet, der erste Gewindebolzen (15) nach oben zeigt und damit zur Halterung des Nivellierungs-, Lotungs- und Winkelkalibrierungsinstrumentes (5) vorgesehen ist.

2. Stativ nach Anspruch 1, **dadurch gekennzeichnet, dass** die Stativbeine (2, 3, 4) Seitenbegxenzungen (7, 8) aufweisen, welche zumindest nahe der frei auskragenden Auflageenden der Stativbeine (2, 3, 4) zueinander konvergieren.

3. Stativ nach Anspruch 1, **dadurch gekennzeichnet, dass** das oberste Stativbein (2) in der gemeinsamen Achse (6) der Stativbeine (2, 3, 4) überragend ein zweiter Gewindebolzen (10) ausgebildet ist, welcher mit einer unterhalb des untersten Stativbeines (4) angeordneten Betätigungsscheibe (11) in Wirkverbindung steht.

4. Stativ nach Anspruch 1, **dadurch gekennzeichnet, dass** die Stativbeine (2, 3, 4) zumindest im Bereich der gemeinsamen Achse (6) mit geringem Abstand (A) zueinander angeordnet sind.

5. Stativ nach Anspruch 4, **dadurch gekennzeichnet, dass** die Stativbeine (2, 3, 4) in zusammengeschwenktem Zustand über deren ganze Länge mit geringem Abstand (A) zueinander angeordnet sind.

6. Stativ nach einem der Ansprüche 1 bis 5, **dadurch gekennzeichnet, dass** die beiden durch die Abbiegung (12) entstandenen Abschnitte (13, 14) der Stativbeine (2, 3, 4) bei allen Stativbeinen (2, 3, 4) unterschiedlich lang ausgeführt sind.

7. Stativ nach Anspruch 6, **dadurch gekennzeichnet, dass** die beiden durch die Abbiegung (12) entstandenen Abschnitte (13, 14) des obersten Stativbeines (2) am längsten und diese Abschnitte (13, 14) des untersten Stativbeines (4) am kürzesten ausgeführt sind.

8. Stativ nach einem der Ansprüche 1 bis 7, **dadurch gekennzeichnet, dass** die beiden Abschnitte (13, 14) der Stativbeine (2, 3, 4) einen Winkel (β) von 135° zueinander einschliessen.

9. Stativ nach einem der Ansprüche 1 bis 8, **dadurch gekennzeichnet, dass** wenigstens eines der Stativbeine (2, 3, 4), vorzugsweise das oberste Stativbein (2) in dem frei auskragenden Abschnitt (14) Ausnehmungen (17), Schlitze, Bohrungen (18) od. dgl. aufweist.

10. Stativ nach einem der Ansprüche 1 bis 9, **dadurch gekennzeichnet, dass** wenigstens eines der Stativbeine (2, 3, 4), vorzugsweise das oberste Stativbein (2) an dem frei auskragenden Abschnitt (14) wenigstens einen vorzugsweise in der Oberfläche des Stativbeines (2) versenkt angeordneten Dauermagneten (20) trägt.

11. Stativ nach Anspruch 9 oder 10, **dadurch gekennzeichnet, dass** wenigstens eines der Stativbeine (2, 3, 4), vorzugsweise das oberste Stativbein (2) in dem frei auskragenden Abschnitt schlüssellochartige Ausnehmungen (19) aufweist.

12. Stativ nach einem der Ansprüche 1 bis 11, **dadurch gekennzeichnet, dass** zur Verbindung eines Stativbeines (2) an einer ebenen Wand ein Doppelklebeband vorgesehen ist.

13. Stativ nach einem der Ansprüche 1 bis 12, **dadurch gekennzeichnet, dass** jedes der Stativbeine um jeweils den gleichen Winkel an einer Abbiegung (12) abgebogen ist, wobei jedes Stativbein (2, 3, 4) einen zwischen der gemeinsamen Achse (6) und der Abbiegung (12) angeordneten Abschnitt (13) und auf der zu diesem Abschnitt (13) gegenüberliegenden Seite der Abbiegung (12) den frei auskragenden Abschnitt (14) aufweist.

14. System aus einem Stativ nach einem der Ansprüche 1 bis 13 und einem Adapter (22, 26), **dadurch gekennzeichnet, dass** der Adapter (22, 26) zum Einsetzen zwischen einem rohrförmigen Halter (23) und einem Stativbein (2) ausgebildet ist, wobei der Adapter (22, 26) eine nutartige Ausnehmung (24, 27) aufweist zum lagesicheren Anlegen an den rohrförmigen Halter (23).

15. System nach Anspruch 14, **dadurch gekennzeichnet, dass** der Adapter (22, 26) mittels eines Befestigungsbandes oder eines Spannbandes (25) an einem rohrförmigen Halter (23) festlegbar ist.

## Claims

1. Stand (1) with at least three stand legs (2, 3, 4), which is embodied for holding a levelling instrument, plumbing instrument and angular calibration instrument (5), for example of a linear laser device, point laser device or small rotary laser device, wherein the stand legs (2, 3, 4) are embodied to be rotatable about a common axis (6) with their mutually facing ends and each of the stand legs (2, 3, 4) is bent by in each case the same angle (α) at a distance from the axis (6), wherein the lowermost stand (4) has, at a freely projecting section (14), a first threaded bolt (15) projecting freely transversely thereto, **characterized in that** the first threaded bolt (15) is arranged and designed in such a way that, when the stand is in use and is located in an orientation for fastening to a wall or a vertically extending holder by means of one of the further stand legs (2, 3), which has a means (17, 18, 20) for fastening the stand at its freely projecting section (14), the first threaded bolt (15) points upwardly and is thus provided for holding the levelling instrument, plumbing instrument and angular calibration instrument (5).

2. Stand according to Claim 1, **characterized in that** the stand legs (2, 3, 4) have lateral boundaries (7, 8) which converge towards one another at least close to the freely projecting support ends of the stand legs (2, 3, 4).

3. Stand according to Claim 1, **characterized in that** a second threaded bolt (10) is designed so as to protrude beyond the uppermost stand leg (2) in the common axis (6) of the stand legs (2, 3, 4), which threaded bolt is in operative connection with an actuating disc (11) arranged below the lowermost stand leg (4).

4. Stand according to Claim 1, **characterized in that** the stand legs (2, 3, 4) are arranged at a slight distance (A) from one another at least in the region of the common axis (6).

5. Stand according to Claim 4, **characterized in that**, in the pivoted-together state, the stand legs (2, 3, 4) are arranged at a slight distance (A) from one another over their entire length.

6. Stand according to any one of Claims 1 to 5, **characterized in that** the two sections (13, 14) of the stand legs (2, 3, 4) defined by the bend (12) are embodied to have different lengths for all the stand legs (2, 3, 4).

7. Stand according to Claim 6, **characterized in that** the two sections (13, 14) of the uppermost stand leg (2) defined by the bend (12) are embodied to be the longest and these sections (13, 14) of the lowermost stand leg (4) are embodied to be the shortest.

8. Stand according to any one of Claims 1 to 7, **characterized in that** the two sections (13, 14) of the stand legs (2, 3, 4) enclose an angle (β) of 135° with respect to one another.

9. Stand according to any one of Claims 1 to 8, **characterized in that** at least one of the stand legs (2, 3, 4), preferably the uppermost stand leg (2), has cutouts (17), slots, bores (18) or the like in the freely projecting section (14).

10. Stand according to any one of Claims 1 to 9, **characterized in that** at least one of the stand legs (2, 3, 4), preferably the uppermost stand leg (2), bears, at the freely projecting section (14), at least one permanent magnet (20) which is preferably arranged countersunk in the surface of the stand leg (2).

11. Stand according to Claim 9 or 10, **characterized in that** at least one of the stand legs (2, 3, 4), preferably the uppermost stand leg (2), has keyhole-like cutouts (19) in the freely projecting section.

12. Stand according to any one of Claims 1 to 11, **characterized in that** a double adhesive tape is provided for connecting a stand leg (2) to a planar wall.

13. Stand according to any one of Claims 1 to 12, **characterized in that** each of the stand legs is bent by in each case the same angle at a bend (12), wherein each stand leg (2, 3, 4) has a section (13) arranged between the common axis (6) and the bend (12) and has the freely projecting section (14) on that side of the bend (12) opposite to this section (13).

14. System comprising a stand according to any one of Claims 1 to 13 and an adaptor (22, 26), **characterized in that** the adaptor (22, 26) is designed for insertion between a tubular holder (23) and a stand leg (2), wherein the adaptor (22, 26) has a groove-like cutout (24, 27) for positionally secure bearing against the tubular holder (23).

15. System according to Claim 14, **characterized in that** the adaptor (22, 26) can be fixed to a tubular holder (23) by means of a fastening strap or a tightening strap (25).

## Revendications

1. Trépied (1) avec au moins trois pieds (2, 3, 4) qui est conçu pour supporter un instrument de nivellement, de projection verticale et de calibrage d'angle (5), par exemple un appareil laser à lignes, à points ou à petite rotation, les pieds du trépied (2, 3, 4) étant réalisés capables de tourner autour d'un axe commun (6) avec leurs extrémités tournées l'une vers l'autre et chacun des pieds du trépied (2, 3, 4) étant courbé selon respectivement le même angle (α) à distance de l'axe (6),
cependant que le pied le plus bas (4) du trépied présente, sur un tronçon monté en porte-à-faux (14), un premier boulon fileté (15) monté en porte-à-faux transversalement par rapport à celui-ci,
**caractérisé en ce**
**que** le premier boulon fileté (5) est placé et configuré tel que, lorsque le trépied est utilisé et se trouve dans une orientation pour une fixation à un mur ou à un support dans le sens vertical au moyen d'un des autres pieds du trépied (2, 3) qui présente un moyen (17, 18, 20) pour la fixation du trépied sur son tronçon monté en porte-à-faux (14), le premier boulon fileté (15) est tourné vers le haut et est donc prévu pour le support de l'instrument de nivellement, de projection verticale et de calibrage d'angle (5).

2. Trépied selon la revendication 1, **caractérisé en ce que** les pieds (2, 3, 4) du trépied présentent des délimitations latérales (7, 8) qui convergent l'une vers l'autre au moins près des extrémités d'appui en porte-à-faux des pieds (2, 3, 4) du trépied.

3. Trépied selon la revendication 1, **caractérisé en ce qu'**un second boulon fileté (10) est configuré en dépassant le pied le plus haut (2) du trépied est configuré dans l'axe commun (6) des pieds (2, 3, 4) du trépied, boulon fileté qui est en relation opérationnelle avec une rondelle d'actionnement (11) placée en dessous du pied de trépied le plus bas (4).

4. Trépied selon la revendication 1, **caractérisé en ce que** les pieds du trépied (2, 3, 4) sont placés à une faible distance (A) l'un de l'autre au moins dans la zone de l'axe commun (6).

5. Trépied selon la revendication 4, **caractérisé en ce que** les pieds du trépied (2 3 4) sont placés, à l'état pivoté ensemble, à une faible distance (A) l'un de l'autre sur toute leur longueur.

6. Trépied selon l'une des revendications 1 à 5, **caractérisé en ce que** les deux tronçons (13, 14) des pieds du trépied (2, 3, 4) qui son formés par la courbure (12) sont réalisés de différente longueur pour tous les pieds du trépied (2, 3, 4).

7. Trépied selon la revendication 6, **caractérisé en ce que** les deux tronçons (13, 14) du pied le plus haut du trépied (2) qui sont formés par la courbure (12) sont les plus longs et ces tronçons (13, 14) du pied le plus bas du trépied (4) sont réalisés les plus courts.

8. Trépied selon l'une des revendications 1 à 7, **caractérisé en ce que** les deux tronçons (13, 14) des pieds du trépied (2, 3, 4) forment un angle (β) de 135° l'un par rapport à l'autre.

9. Trépied selon l'une des revendications 1 à 8, **caractérisé en ce qu'**au moins l'un des pieds du trépied (2, 3, 4), de préférence le pied le plus haut du trépied (2), présente, dans le tronçon monté en porte-à-faux (14), des évidements (17), des fentes, des forures (18) ou équivalent.

10. Trépied selon l'une des revendications 1 à 9, **caractérisé en ce qu'**au moins l'un des pieds du trépied (2, 3, 4), de préférence le pied le plus haut du trépied (2), présente, dans le tronçon monté en porte-à-faux (14), au moins un aimant permanent (20) placé de préférence enfoncé dans la surface du pied du trépied (2).

11. Trépied selon la revendication 9 ou 10, **caractérisé en ce qu'**au moins l'un des pieds du trépied (2, 3, 4), de préférence le pied le plus haut du trépied (2), présente des évidements de type trou de serrure dans le tronçon monté en porte-à-faux.

12. Trépied selon l'une des revendications 1 à 11, **caractérisé en ce qu'**un ruban adhésif double est prévu pour relier un pied de trépied (2) à un mur plan.

13. Trépied selon l'une des revendications 1 à 12, **caractérisé en ce que** chacun des pieds de trépied est courbé de respectivement le même angle à une courbure (12), chaque pied de trépied (2, 3, 4) présentant un tronçon (13) placé entre l'axe commun (6) et la courbure (12) et le tronçon monté en porte-à-faux (14) sur le côté de la courbure qui est opposé à ce tronçon (13).

14. Système composé d'un trépied selon l'une des revendications 1 à 13 et d'un adaptateur (22, 26), **caractérisé en ce que** l'adaptateur (22, 26) est configuré pour être mis en place entre un support tubulaire (23) et un pied de trépied (2), l'adaptateur (22, 26) présentant un évidement de type rainure (24, 27) pour l'appui en position sûre contre le support tubulaire (23).

15. Système selon la revendication 14, **caractérisé en ce que** l'adaptateur (22, 26) peut être fixé au moyen d'une bande de fixation ou d'une bande de serrage (25) contre un support tubulaire (23).
